Europäisches Patentamt

European Patent Office

Office européen des brevets

(11) Numéro de publication: **0 426 922 A1**

# DEMANDE DE BREVET EUROPEEN

(21) Numéro de dépôt: 89403040.2

(22) Date de dépôt: 06.11.89

(51) Int. Cl.⁵: **B60D 1/06**, B60T 7/20

Revendications modifiées conformément à la règle 86 (2) CBE.

(43) Date de publication de la demande:
15.05.91 Bulletin 91/20

(84) Etats contractants désignés:
AT BE CH DE ES FR GB GR IT LI LU NL SE

(71) Demandeur: **Hervier, Christian**
**13, rue Valette**
**F-75005 Paris(FR)**

(72) Inventeur: **Hervier, Christian**
**13, rue Valette**
**F-75005 Paris(FR)**

(54) **Commande de frein à quadrilatère déformable et à auto-assistance pour remorque.**

(57) L'invention concerne une commande de frein à inertie pour remorque permettant une grande démultiplication et éventuellement une assistance au freinage en utilisant les efforts verticaux sur l'attelage pour, dans un premier temps, contrarier le freinage indésirable de la remorque et, dans un second temps, le favoriser en l'assistant.

Il est constitué de la flèche de la remorque (1) d'un bras avec la coquille d'attelage (2) de bielles de jonction (3) articulés par 4 axes (4) dont le positionnement permet de choisir la courbe de translation (8);(9) et (10) de l'axe de la coquille d'attelage (11) par rapport à la flèche de la remorque (1). Une butée règlable (5) et un règlage de la commande de frein (6) articulé en (7) permettent de favoriser plus ou moins les effets de retenue et d'assistance au freinage de la remorque.

FIG. 1

Xerox Copy Centre

La présente invention concerne un dispositif de commande de frein pour remorques, manoeuvré par inertie lors des décélérations du véhicule tracteur.

Les procédés traditionnels, possèdent généralement une chappe coulis sante horizontale qui a la particularité de n'utiliser que les efforts coaxiaux à l'attelage exercés sur celui-ci. De plus, pour éviter une utilisation trop systématique des freins de la remorque au moindre ralentissement du véhicule tracteur, la démultiplication de la commande des freins se trouve limitée.

Le dispositif selon l'invention permet d'éviter la résistance au glissement d'une chappe coulissante en utilisant le principe du quadrilatère déformable. 4 axes travaillent en rotation avec des bielles assurant la jonction entre la flèche de la remorque et le reste de l'attelage.

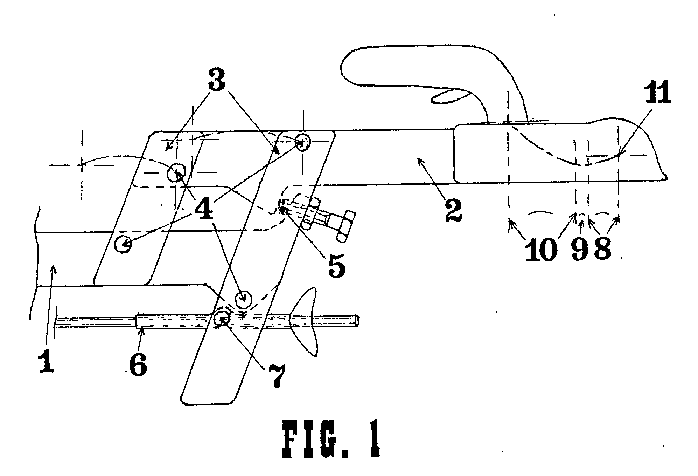

Ce dispositif permet, en choisissant judicieusement le positionnement des 4 axes qui peut être règlable, de choisir la translation de l'axe de la coquille d'attelage par rapport à la remorque adapté au résultat désiré. Cette translation peut être :
- soit sensiblement rectiligne comme dans les procédés classiques, - ou être en courbe. Pour les remorques en balancier sur leurs roues dont le poids n'exerce à l'arrêt que peu de contraintes sur l'attelage du véhicule tracteur, cette courbe peut permettre d'utiliser les efforts verticaux sur l'attelage comme l'illustre le dessin annexé. Pour, dans un premier temps, limiter le fonctionnement intempestif des freins à la moindre décélération (tout en gardant éventuellement une grande démultiplication de manoeuvre du freinage qui peut être règlable). Ceci en contrariant cette manoeuvre par l'appui sur l'attelage de la remorque en décélération. L'invention permet dans un second temps, éventuellement, d'assister l'effort horizontal d'inertie résiduelle sur l'attelage, par l'apport d'une partie du couple résistant du freinage en cours (augmenté du déport du poids de la remorque sur l'avant).

Ces deux phases de freinage étant, bien entendu, reliées progressivement par la zône de déplacement de la flèche de la remorque par rapport à la coquille d'attelage sensiblement horizontale. De plus, les réglages de la butée limitant l'avancée de la commande en traction, celui agissant sur le jeu du frein au repos et éventuellement le choix de démultiplication de la commande de frein, permettent de privilégier l'une ou l'autre de ces phases.

Selon des modes particuliers de réalisation :
- Un ou plusieurs bras de sécurité avec des axes flottants peuvent être prévus pour parer à l'éventuelle rupture d'un axe.
- Le levier de commande de frein peut être positionné différemment, il peut, bien évidemment, tirer ou pousser, un câble ou un piston...
- Un carter de protection peut être également prévu et fixé à un des éléments constitutif du procédé.
- Tout autre positionnement, des 4 axes d'articulation et de celui déterminant la démultiplication du freinage, que ceux mis en évidence sur le dessin annexé peut être prévu, ainsi qu'un éventuel règlage de leur positionnement.
- Le bras avec la coquille d'attelage peut être placé éventuellement en dessous de la flèche.
- Un frein automatique, un frein de parking, un amortisseur régulant les mouvements de l'ensemble, ou un, ou plusieurs de ces éléments, peu vent également être ajouté au procédé.

Le dessin annexé illustre l'invention :
La figure unique représente une vue de côté du dispositif selon l'invention.

En référence à ce dessin, le dispositif comporte, la flèche de la remorque (1) le bras avec la coquille d'attelage (2) réunis avec la flèche de la remorque (1) par des bielles (3) ou autres éléments mobiles, l'ensemble étant articulé sur 4 axes (4). Une butée règlable (5) limite l'avancée du bras avec la coquille d'attelage (2). Après avoir règlé soigneusement la commande de frein (6) articulée en (7) avec une très forte démultiplication, on oblige dans une petite décélération (8) du véhicule tracteur, la flèche de la remorque à remonter en contradiction avec le report du poids de la remorque sur l'avant. Cette translation est schématisée par l'axe de la coquille d'attelage (11). Lors d'un freinage intensif (9) du véhicule tracteur, à l'invers, l'écrasement de la flèche par le report du poids de la remorque sur l'avant, aidé du couple résistant du freinage en cours, contribue au freinage et assure une poussée horizontale minimum sur le véhicule tracteur tout en lui donnant une pression verticale au niveau de l'attelage augmentant sa propre adhérence arrière.

La zône de freinage intermédiaire (10) garantit un fonctionnement progressif. Suivant le règlage de la butée (5) et de la commande de frein (6), cette plage d'utilisation sans contrainte verticale peut être choisie plus ou moins tard dans la course du frein en fonction du poids du véhicule tracteur par rapport à celui de la remorque.

**Revendications**

1) Dispositif de commande de frein à inertie pour remorque caractérisé par l'utilisation d'un quadrilatère déformable grâce à 4 articulations (4) qui assurent une plus libre translation que les chappes coulissantes.

2) Dispositif selon la revendication 1 caractérisé par le fait que le constructeur, en positionnant judicieusement les 4 axes (4) d'articulation du quadrilatère déformable, choisi le tracé de la translation de l'axe de la coquille d'attelage (11) par rapport à la flèche de la remorque (1), plus ou moins rectiligne ou courbe afin d'éventuellement utiser les efforts verticaux sur l'attelage pour contrarier ou favoriser les phases du freinage des roues de la remorque.

3) Dispositif selon les revendications 1 et 2 caractérisé par le fait que le positionnement d'un ou plusieurs des 4 axes (4) est règlable afin de modifier l'incidence des efforts verticaux sur le freinage de la remorque en fonction de l'utilisation.

4) Dispositif selon les revendications 1;2 et 3 caractérisé par le fait que le bras avec la coquille d'attelage (2) se trouve soit au dessus, soit en dessous de la flèche de la remorque (1).

5) Dispositif selon l'une quelconque des revendications précédentes caractérisé par ce qu'un ou plusieurs bras de sécurité avec des axes flottants réunissent en sus des bielles (3), le bras avec la coquille d'attelage (2) avec la flèche de la remorque (1).

6) Dispositif selon l'une quelconque des revendications précédentes caractérisé en ce que la commande de frein, cable, tringle ou piston, se situe à tout autre endroit des éléments constitutifs du procédé et peut tirer ou pousser et peut être à positionnement règlable.

7) Dispositif selon l'une quelconque des revendications précédentes caractérisé par l'ajout d'un carter de protection fixé à un des éléments constitutifs du procédé.

8) Dispositif selon l'une quelconque des revendications précédentes caractérisé par l'apport à l'ensemble d'un frein automatique de sécurité en cas de rupture d'attelage, d'un frein de parking, d'un amortisseur régulant les déplacements de l'ensemble ou d'un ou plusieurs de ces éléments.

Revendications modifiées conformément à la règle 86(2) CBE.

1) Dispositif de commande de frein a inertie à "quadrilatère déformable" pour remorque comportant un support de coquille d'attelage (2), ou autre anneau, relié à la flèche de la remorque (1) par des bras (3) articulés en (4) et commandant le frein (6), caractérisé en ce que la translation du point d'articulation de la coquille d'attelage, ou autre anneau, (11) est tout d'abord descendante puis remontante par rapport à l'axe horizontal de la flèche de la remorque (1), cette "descente" et cette "montée" étant entre leurs extrêmités respectives de leurs courses, d'au moins 10 pour 100 par rapport à l'horizontal de la remorque en position attelée.

2) Dispositif selon la revendication 1 caractérisé par le fait que le positionnement d'un ou plusieurs des 4 axes (4) est règlable afin de modifier l'incidence des efforts verticaux sur le freinage de la remorque en fonction de l'utilisation.

3) Dispositif selon les revendications 1 et 2 caractérisé par le fait que le bras avec la coquille d'attelage (2) se trouve, soit au dessus, soit en dessous de la flèche de la remorque (1).

4) Dispositif selon les revendications 1; 2 et 3 caractérisé par ce qu'un ou plusieurs bras de sécurité avec des axes flottants réunissent en sus des bielles (3), le bras avec la coquille d'attelage (2) avec la flèche de la remorque (1).

5) Dispositif selon l'une quelconque des revendications précédents caractérisé en ce que la commande de frein, cable, tringle ou piston, se situe à tout autre endroit des éléments constitutifs du procédé et peut tirer ou pousser et peut être à positionnement règlable.

6) Dispositif selon l'une quelconque des revendications précédentes caractérisé par le fait qu'un règlage (5) permet de limiter la course vers l'avant de la coquille d'attelage et par conséquent autorise un déclenchement de la commande des freins plus ou moins facile.

7) Dispositif selon l'une quelconque des revendications précédentes caractérisé par l'ajout d'un carter de protection fixé à un des éléments constitutifs du procédé.

8) Dispositif selon l'une quelconque des revendications précédentes caractérisé par l'apport à l'ensemble d'un frein automatique de sécurité en cas de rupture d'attelage, d'un frein de parking, d'un amortisseur régulant les déplacements de l'ensemble ou d'un ou plusieurs de ces éléments.

FIG. 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-779155 (F. KNOEBEL) <br> * page 2, ligne 12 - page 2, ligne 39; figures 1, 2 * | 1 | B60D1/06 <br> B60T7/20 |
| A | | 4, 6, 8 | |
| | --- | | |
| X | FR-A-47944 (T. GRISON) <br> * le document en entier * | 1 | |
| A | | 2, 4, 6 | |
| | --- | | |
| X | FR-A-1283477 (G. BRIDE - ETIVANT) <br> * page 1, colonne de gauche, ligne 41 - page 2, colonne de gauche, ligne 10; figures 1-5 * | 1 | |
| A | | 2-4, 6 | |
| | --- | | |
| X | DE-A-3440679 (N. G. LÖÖV) <br> * page 6, ligne 27 - page 9, ligne 12; figure 1 * | 1 | |
| A | | 2, 4, 6 | |
| | --- | | |
| X | DE-B-1111526 (FA. H. JENZ) <br> * colonne 3, ligne 37 - colonne 4, ligne 59; figures 1-4 * | 1 | DOMAINES TECHNIQUES RECHERCHES (Int. Cl.5) |
| A | | 2-4, 6, 8 | B60D <br> B60T |
| | --- | | |
| X | DE-C-927617 (O. R. KOLPE) <br> * page 2, ligne 38 - page 2, ligne 72; figure 1 * | 1 | |
| A | | 4, 6 | |
| | --- | | |
| X | GB-A-443834 (W. BRIDGES) <br> * page 3, ligne 45 - page 3, ligne 96; figures 10, 11 * | 1 | |
| A | | 2, 4, 6, 8 | |

Le présent rapport a été établi pour toutes les revendications

| Lieu de la recherche | Date d'achèvement de la recherche | Examinateur |
|---|---|---|
| LA HAYE | 26 JUIN 1990 | CHLOSTA P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)